(19) 

Europäisches Patentamt
European Patent Office
Office européen des brevets

(11) **EP 2 835 209 B1**

(12) **EUROPEAN PATENT SPECIFICATION**

(45) Date of publication and mention
of the grant of the patent:
**07.09.2016 Bulletin 2016/36**

(21) Application number: **13772114.8**

(22) Date of filing: **04.04.2013**

(51) Int Cl.:
**B23K 20/12** *(2006.01)* **C22C 38/00** *(2006.01)*
**C22C 38/14** *(2006.01)* **C22C 38/58** *(2006.01)*

(86) International application number:
**PCT/JP2013/002349**

(87) International publication number:
**WO 2013/150801 (10.10.2013 Gazette 2013/41)**

(54) **METHOD FOR FRICTION-STIR WELDING OF STEEL SHEET**

VERFAHREN ZUM RÜHRREIBSCHWEISSEN VON STAHLBLECH

PROCÉDÉ DE SOUDAGE PAR FRICTION-MALAXAGE D'UNE FEUILLE D'ACIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.04.2012 JP 2012086924**

(43) Date of publication of application:
**11.02.2015 Bulletin 2015/07**

(73) Proprietor: **JFE Steel Corporation
Tokyo 100-0011 (JP)**

(72) Inventors:
• **MATSUSHITA, Muneo
Tokyo 100-0011 (JP)**
• **IKEDA, Rinsei
Tokyo 100-0011 (JP)**
• **KITANI, Yasushi
Tokyo 100-0011 (JP)**

(74) Representative: **Grünecker Patent- und
Rechtsanwälte
PartG mbB
Leopoldstraße 4
80802 München (DE)**

(56) References cited:
**WO-A2-2010/059201      JP-A- 2006 110 548
JP-A- 2007 061 863      JP-A- 2008 255 369
JP-A- 2009 269 077      JP-A- 2010 090 418
JP-A- 2010 253 534      JP-A- 2010 280 283
JP-A- 2011 167 764      JP-A- 2011 235 335
JP-A- 2012 040 584**

• **WEI L Y ET AL: "Correlation of Microstructures
and Process Variables in FSW HSLA-65 Steel",
WELDING JOURNAL, AMERICAN WELDING
SOCIETY, MIAMI, FL, US, vol. 90, no. 5, 1 May 2011
(2011-05-01), pages 95-S, XP001571086, ISSN:
0043-2296**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a method for friction-stir welding of steel sheets by causing plastic flow to occur while softening the steel sheets.

BACKGROUND ART

Friction-stir welding is a technique for welding metal materials by first softening the metal materials through the production of frictional heat in the metal materials and then causing plastic flow to occur by stirring the softened region. Friction-stir welding is widely used as a suitable technique for welding metal materials with a low melting point, such as aluminum alloys, magnesium alloys, and the like (for example, a variety of components in aircraft, ships, railway cars, automobiles, and the like).

Upon welding metal materials with a low melting point using a conventional arc welding method, the weld portion easily overheats, causing a variety of defects. Friction-stir welding can thus be used both to improve productivity and to form a weld portion with good joint characteristics.

Therefore, a variety of techniques for friction-stir welding are being examined.

For example, JP S62-183979 A (PTL 1) discloses a technique for welding metal materials. One or both of a pair of metal materials are rotated, and while producing frictional heat thereby in the metal materials to soften the metal materials, the softened region is stirred so as to cause plastic flow.

Since metal materials are rotated with this technique, however, the shape and dimensions of the welded metal materials are limited.

JP H7-505090 A (PTL 2) also discloses a technique for welding metal materials. While inserting a rotating tool, made of a material harder than the metal materials, into a weld portion of the metal materials, moving the rotating tool while causing the rotating tool to rotate, and softening the metal materials by producing frictional heat in the metal materials, the softened region is stirred so as to cause plastic flow. Since this technique does not rotate the metal materials, but rather moves the rotating tool while rotating the rotating tool, metal materials with a substantially unlimited length can be welded continuously in the longitudinal direction. Furthermore, this welding technique uses the frictional heat and plastic flow produced by friction between the rotating tool and the metal materials, thus allowing for welding without melting the weld portion and suppressing the occurrence of defects. The temperature of the weld portion is relatively low, thereby also suppressing deformation.

When applying the technique disclosed in PTL 2 to metal materials with a high melting point (such as steel sheets or the like), however, sufficient softening becomes difficult. Not only does workability degrade, but also a problem occurs in that good joint characteristics cannot be obtained.

JP 2003-532542 A (PTL 3) and JP 2003-532543 A (PTL 4) disclose a rotating tool formed from abrasion-resistant material, such as polycrystalline cubic boron nitride (PCBN) or silicon nitride ($SiN_4$), for application to friction-stir welding of a variety of steel sheets used in large quantities as material for structures such as buildings, ships, heavy machinery, pipelines, automobiles, and the like.

These ceramics are brittle, however, and therefore in order to prevent damage to the rotating tool, the sheet thickness of the steel sheets to be welded and the processing conditions are severely restricted.

In order to practically implement friction-stir welding of steel sheets, it is necessary to eliminate the restrictions on sheet thickness and processing conditions to achieve excellent workability equivalent to conventional arc welding.

JP 2008-31494 A (PTL 5) thus discloses steel material to which Si, Al, and Ti are added as ferrite-stabilizing elements in addition to the basic elements of C, Mn, P, and S, thus reducing the deformation resistance upon friction-stir welding.

It is known that during friction-stir welding of steel sheets, however, the frictional heat and plastic flow generated by friction are not uniform but rather change locally, therefore greatly affecting the mechanical properties of the weld portion. In particular, toughness becomes uneven (see Japan Welding Society, Outline of National Convention Lecture, No. 87 (2010), 331 (NPL 1)). In other words, the technique disclosed in PTL 5 has the problem that a weld portion with uniform toughness cannot be obtained.

NPL2 discloses a study focusing an developing a relationship between process variables and postweld microstructure in friction stir welded HSLA - 65 steel.

CITATION LIST

Patent Literature

PTL 1: JP S62-183979 A
PTL 2: JP H7-505090 A
PTL 3: JP 2003-532542 A
PTL 4: JP 2003-532543 A
PTL 5: JP 2008-31494 A

Non-patent Literature

NPL 1: Japan Welding Society, Outline of National Convention Lecture, No. 87 (2010), 331
NPL2: "Correlation of Microstructures and Process Variables in FSW HSLA-65 Steel", Welding Journal, American Welding Society, vol.90, no.5, 1 May 2011

SUMMARY OF INVENTION

(Technical Problem)

It is an object of the present invention to provide a method for friction-stir welding that, when friction-stir welding steel sheets, can prevent local change in the frictional heat and plastic flow generated by friction and can yield a weld portion with uniform and good toughness.

(Solution to Problem)

The inventors examined a technique for forming a weld portion in which toughness is evenly distributed by friction-stir welding steel sheets. At that time, the inventors focused on a pinning effect that suppresses coarsening of austenite grains generated during friction-stir welding by dispersing, throughout the steel sheets, fine precipitates of TiN or the like that are stable at a high temperature. The reason is that by forming fine austenite grains through the pinning effect and also refining ferrite grains that are generated by microstructure transformation in a subsequent cooling process, the toughness of the weld portion can be improved while also achieving uniformity.

Therefore, in order to bring out the pinning effect during friction-stir welding of steel sheets, the inventors closely investigated the processing conditions of friction-stir welding and the components of steel sheets suitable for friction-stir welding.

With regard to the processing conditions when performing friction-stir welding using a rotating tool, the inventors arrived at discovery (a) below. (a) During friction-stir welding of steel sheets, the amount of heat to input can be calculated based on the rotation speed, rotational torque, and travel speed of the rotating tool and the sheet thickness of the steel sheets. In other words, the amount of heat per unit time can be obtained by multiplying the rotation speed and rotational torque of the rotating tool. By further dividing by the travel speed of the rotating tool, the amount of heat per unit length of the weld portion (referred to below as the welding heat input) can be calculated. Dividing this welding heat input by the sheet thickness of the steel sheets yields the welding heat input per unit length of the sheet thickness (referred to below as HIPT), and by adjusting the HIPT, the pinning effect can be effectively realized.

Note that as described above, HIPT ($kJ/mm^2$) can be calculated with Expression (1). In Expression (1), RT is the rotational torque of the rotating tool (Nm), RS is the rotation speed of the rotating tool (rpm), TS is the travel speed of the rotating tool in the welding direction (mm/min), and t is the sheet thickness of the steel sheets (mm).

$$HIPT = (6.28 \times RT \times RS)/TS/t/1000 \quad (1)$$

With regard to the components of steel sheets suitable for friction-stir welding using a rotating tool, the inventors arrived at discovery (b) below. (b) By adjusting the components of the steel sheets (in particular Ti and N), fine TiN can be dispersed throughout the steel sheets, thus achieving the effect of improved, uniform toughness of the weld portion.

The content of Ti and N for achieving this effect can be prescribed by a function taking HIPT as a parameter.

The present invention is based on these discoveries.

Specifically, a method according to the present invention for friction-stir welding of steel sheets comprises: while inserting a rotating tool into a weld portion of the steel sheets, moving the rotating tool while causing the rotating tool to rotate, and softening the steel sheets by frictional heat with the rotating tool, stirring a softened region with the rotating tool so as to cause plastic flow to occur, the rotating tool including a shoulder and a pin disposed on the shoulder and sharing a rotation axis with the shoulder, at least the shoulder and the pin being made of a material harder than the steel sheets, wherein

a welding heat input HIPT (kJ/mm$^2$) per unit length of a sheet thickness of the steel sheets calculated with Expression (1) is controlled to be in a range of 0.3 to 1.5, when for the rotating tool, rotation speed RS is from 100 rpm to 1000 rpm, rotational torque RT is from 50 Nm to 500 Nm, and travel speed TS is from 10 mm/min to 1000 mm/min, and the sheet thickness is t (mm), and the steel sheets have a composition including 0.01 mass% to 0.2 mass% of C, 0.5 mass% to 2.0 mass% of Mn, 0.6 mass% or less of Si, 0.030 mass% or less of P, 0.015 mass% or less of S, and 0.0060 mass% or less of O, a content of Ti [%Ti] and a content of N [%N] satisfying Expressions (2) to (4) in relation to the HIPT, Ceq calculated with Expression (5) from contents [%C], [%Si], and [%Mn] of C, Si, and Mn being 0.5 mass% or less, and the balance being Fe and incidental impurities:

$$HIPT = (6.28 \times RT \times RS)/TS/t/1000 \quad (1)$$

$$0.0045 + (1/200) \times HIPT \leq [\%Ti] \leq 0.28 - (2/15) \times HIPT \quad (2)$$

$$0.00275 + (1/1200) \times HIPT \leq [\%N] \leq 0.0225 - (1/120) \times HIPT \quad (3)$$

$$1.75 + (5/6) \times HIPT \leq [\%Ti]/[\%N] \leq 13 - (10/3) \times HIPT \quad (4)$$

$$Ceq = [\%C] + ([\%Si]/24) + ([\%Mn]/6) \quad (5)$$

where [%X] is content of element X (mass%)

In the method according to the present invention for friction-stir welding of steel sheets, the composition of the steel sheets optionally additionally includes at least one selected from the group consisting of Al: 0.005 mass% to 0.10 mass% and V: 0.003 mass% to 0.10 mass%, Cu: 0.05 mass% to 1.0 mass%, Ni: 0.05 mass% to 1.0 mass%, Cr: 0.05 mass% to 0.50 mass%, Mo: 0.02 mass% to 0.50 mass%, and Nb: 0.003 mass% to 0.050 mass%.

(Advantageous Effect of Invention)

According to the present invention, when friction-stir welding steel sheets, local change in the frictional heat and plastic flow generated by friction can be prevented, and a weld portion with uniform and good toughness can be obtained, thus yielding a significantly advantageous effect in industrial terms.

BRIEF DESCRIPTION OF DRAWINGS

The present invention will be further described below with reference to the accompanying drawings, wherein:

FIG. 1 is a cross-sectional diagram schematically illustrating an example of the positions of the rotating tool and steel sheets in the present invention;
FIG. 2 is a side view illustrating an example of a preferred rotating tool in the present invention;
FIG. 3 is a side view illustrating another example of a preferred rotating tool in the present invention; and
FIG. 4 is a cross-sectional diagram illustrating specimen-collecting positions.

DESCRIPTION OF EMBODIMENTS

The following describes the present invention in detail with reference to the drawings.

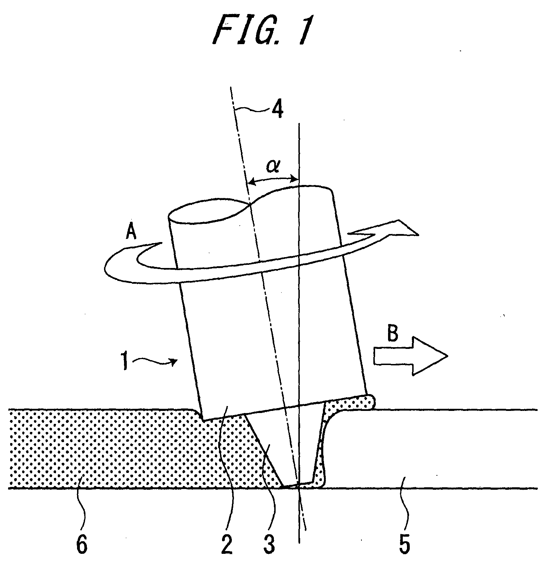

FIG. 1 is a cross-sectional diagram schematically illustrating an example of the positions of the rotating tool and steel sheets in the present invention. A rotating tool 1 that rotates in the direction of the arrow A centering on a rotation axis 4 includes a shoulder 2 and a pin 3. The rotation axis 4 is the same for the shoulder 2 and the pin 3. At least the shoulder 2 and the pin 3 of the rotating tool 1 are made of a material harder than the steel sheets 5. Note that for this hard material, polycrystalline cubic boron nitride (PCBN), silicon nitride ($SiN_4$), or the like may advantageously be used.

In the present invention, the steel sheets 5 are welded as follows. While inserting the rotating tool 1 into a region of the steel sheets 5 to be welded (referred to below as the weld portion), moving the rotating tool 1 in the direction of the arrow B while causing the rotating tool 1 to rotate, and softening the weld portion 6 of the steel sheets 5 by frictional heat with the rotating tool 1, the softened region is stirred with the rotating tool 1 so as to cause plastic flow to occur.

First, the processing conditions for friction-stir welding the steel sheets 5 as described above using the rotating tool 1 are described. Rotation speed of rotating tool: 100 rev/min to 1000 rev/min

The rotation speed (RS) of the rotating tool 1 needs to be set in an appropriate range to generate frictional heat between the rotating tool 1 and the weld portion 6 of the steel sheets 5 and to stir the softened weld portion 6 so as to cause plastic flow to occur. If the rotation speed is less than 100 rev/min, sufficient heat generation and plastic flow cannot be obtained, leading to defective welding. On the other hand, if the rotation speed exceeds 1000 rev/min, excessive heat and plastic flow occur, causing burrs or defects in the weld portion 6. The weld portion 6 thus cannot be formed to have a good shape. Furthermore, the rotating tool 1 heats excessively, making it easy for the rotating tool I to break. Accordingly, the rotation speed of the rotating tool 1 is set to be from 100 rev/min to 1000 rev/min.

Rotational torque of rotating tool: 50 Nm to 500 Nm

The rotational torque (RT) of the rotating tool 1 needs to be set in an appropriate range to generate frictional heat between the rotating tool 1 and the weld portion 6 of the steel sheets 5 and to stir the softened weld portion 6 so as to cause plastic flow to occur. If the rotational torque is less than 50 Nm, sufficient heat generation and plastic flow cannot be obtained, leading to defective welding. Furthermore, an excessive load is placed on the rotating tool 1 in the welding direction, making it easy for the rotating tool 1 to break. On the other hand, if the rotational torque exceeds 500 Nm, excessive heat and plastic flow occur, causing burrs or defects in the weld portion 6. The weld portion 6 thus cannot be formed to have a good shape. Furthermore, the rotating tool 1 heats excessively, making it easy for the rotating tool 1 to break. Accordingly, the rotational torque of the rotating tool 1 is set to be from 50 Nm to 500 Nm.

Travel speed of rotating tool: 10 mm/min to 1000 mm/min

From the perspective of improved workability of friction-stir welding, the travel speed (TS) of the rotating tool 1 is preferably fast, yet to achieve a sound weld portion 6, the travel speed needs to be set within an appropriate range. If the travel speed is less than 10 mm/min, excessive heat is generated, coarsening the microstructure. The toughness of the weld portion 6 thus degrades and varies more widely. On the other hand, if the travel speed exceeds 1000 mm/min, sufficient heat generation and plastic flow cannot be obtained, leading to defective welding. Furthermore, an excessive load is placed on the rotating tool 1, making it easy for the rotating tool 1 to break. Accordingly, the travel speed of the rotating tool 1 is set to be from 10 mm/min to 1000 mm/min.

Welding heat input (HIPT) per unit length of sheet thickness: 0.3 $kJ/mm^2$ to 1.5 $kJ/mm^2$

The HIPT is a value calculated by Expression (1) below. If the HIPT is less than 0.3 $kJ/mm^2$, sufficient heat generation and plastic flow cannot be obtained, leading to defective welding. Furthermore, an excessive load is placed on the rotating tool 1, making it easy for the rotating tool 1 to break. Conversely, if the HIPT exceeds 1.5 $kJ/mm^2$, excessive heat is generated, coarsening the microstructure. The toughness of the weld portion 6 thus degrades and varies more widely. Accordingly, the HIPT is set to be from 0.3 $kJ/mm^2$ to 1.5 $kJ/mm^2$. Here, t in Expression (1) indicates the sheet thickness (mm) of the steel sheets 5.

$$HIPT = (6.28 \times RT \times RS)/TS/t/1000 \quad (1)$$

Note that a spiral protrusion (referred to below as a spiral) may be provided on the pin 3 of the rotating tool 1. By providing a spiral, the softened region of the steel sheets 5 can reliably be stirred, and plastic flow can stably be caused to occur.

Next, the components of steel sheets in which the present invention is applied are described.

C: 0.01 mass% to 0.2 mass%

Carbon (C) is an element that increases the strength of the steel sheet. In order to guarantee the required strength, the C content needs to be 0.01 mass% or more. If the C content exceeds 0.2 mass%, however, the toughness and workability of the steel sheet degrade. Accordingly, the C content is set to be from 0.01 mass% to 0.2 mass%. The C content is preferably from 0.04 mass% to 0.16 mass%.

Mn: 0.5 mass% to 2.0 mass%

Manganese (Mn) is an element that increases the strength of the steel sheet. In order to guarantee the required strength, the Mn content needs to be 0.5 mass% or more. If the Mn content exceeds 2.0 mass%, however, a mixed microstructure of ferrite and bainite is generated due to air cooling after rolling during the process of manufacturing a steel sheet, causing the toughness of the steel sheet to degrade. Accordingly, the Mn content is set to be from 0.5 mass% to 2.0 mass%. The Mn content is preferably from 1.0 mass% to 1.7 mass%.

Si: 0.6 mass% or less

Silicon (Si) is an element that increases the strength of the steel sheet, yet upon the Si content exceeding 0.6 mass%, the toughness of the weld portion degrades dramatically. Accordingly, the Si content is set to be 0.6 mass% or less. Conversely, with a Si content of less than 0.05 mass%, the strength of the steel sheets is not sufficiently obtained. Therefore, the Si content is preferably from 0.05 mass% to 0.6 mass%.

P: 0.030 mass% or less

Since phosphorus (P) is an element that reduces the toughness of the steel sheet, the P content is preferably reduced insofar as possible. A content of up to 0.030 mass%, however, is tolerable. Accordingly, the P content is set to be 0.030 mass% or less. Reducing P content to less than 0.001 mass%, however, would increase the burden of the refining process for welding steel sheet materials. Therefore, the P content is preferably from 0.001 mass% to 0.030 mass%.

S: 0.015 mass% or less

Sulfur (S) mainly exists in a steel sheet as MnS and is an element that has the effect of refining the microstructure when the steel sheet is rolled during the manufacturing process. If the S content exceeds 0.015 mass%, however, the toughness of the steel sheet degrades. Accordingly, the S content is set to be 0.015 mass% or less. Reducing S content to less than 0.004 mass%, however, would increase the burden of the refining process for welding steel sheet materials. Therefore, the S content is preferably from 0.004 mass% to 0.015 mass%.

O: 0.0060 mass% or less

Upon the O content exceeding 0.0060 mass%, a non-metal inclusion is generated in the steel sheet, causing the toughness and purity of the steel sheet to degrade. Accordingly, the O content is set to be 0.0060 mass% or less. Reducing O content to less than 0.0003 mass%, however, would increase the burden of the refining process for welding steel sheet materials. Therefore, the O content is preferably from 0.0003 mass% to 0.0060 mass%.

$$\text{Ti: } (0.0045 + (1/200) \times \text{HIPT}) \text{ to } (0.28 - (2/15) \times \text{HIPT}) \text{ mass\%}$$

Titanium (Ti) mainly exists in a steel sheet as TiN and is an element that is effective for refining the crystal grains. TiN suppresses grain growth of austenite grains due to heating in the process of manufacturing a steel sheet and exists dispersed in the austenite grains. When including V as an optional element, TiN becomes the product nucleus of VN and has the effect of promoting precipitation of VN. During friction-stir welding, the frictional heat and plastic flow generated by friction are not uniform, but rather change locally. Therefore, the upper and lower limits of the Ti content (mass%) that are effective for improving toughness of the weld portion are prescribed using HIPT as a parameter. Specifically, the Ti content [%Ti] is set within a range satisfying Expression (2) below.

$$0.0045 + (1/200) \times HIPT \leq [\%Ti] \leq 0.28 - (2/15) \times HIPT \quad (2)$$

$$N: (0.00275 + (1/1200) \times HIPT) \text{ to } (0.0225 - (1/120) \times HIPT) \text{ mass}\%$$

Nitrogen (N) combines with Ti and V in the steel sheets to form TiN and VN and is an element that is effective for refining the crystal grains. These nitrides suppress the grain growth of austenite grains due to heating in the process of manufacturing a steel sheet and also become the product nucleus of ferrite, having the effect of promoting generation of ferrite. The effects of TiN are as described above. VN precipitates within ferrite grains after ferrite transformation during the process of manufacturing a steel sheet and increases the strength of the steel sheet. VN can therefore strengthen the steel sheet without performing intensified water cooling during the cooling after rolling. As a result, the characteristics of the steel sheet in the sheet thickness direction can be made uniform, and residual stress and residual strain can be reduced. During friction-stir welding, the frictional heat and plastic flow generated by friction are not uniform, but rather change locally. Therefore, the upper and lower limits of the N content (mass%) that are effective for improving toughness of the weld portion are prescribed using HIPT as a parameter. Specifically, the N content [%N] is set within a range satisfying Expression (3) below.

$$0.00275 + (1/1200) \times HIPT \leq [\%N] \leq 0.0225 - (1/120) \times HIPT \quad (3)$$

$$[\%Ti]/[\%N]: (1.75 + (5/6) \times HIPT) \text{ to } (13 - (10/3) \times HIPT)$$

Upon the ratio [%Ti]/[%N] of the Ti content [%Ti] to the N content [%N] falling below the appropriate range, free N in the steel sheet increases, degrading the workability of friction-stir welding and promoting strain aging. If the ratio exceeds the appropriate range, however, TiC is formed, and the toughness of the steel sheet degrades. During friction-stir welding, the frictional heat and plastic flow generated by friction are not uniform, but rather change locally. Therefore, the upper and lower limits of [%Ti]/[%N] that are effective for improving toughness of the weld portion are prescribed using HIPT as a parameter. Specifically, [%Ti]/[%N] is set within a range satisfying Expression (4) below.

$$1.75 + (5/6) \times HIPT \leq [\%Ti]/[\%N] \leq 13 - (10/3) \times HIPT \quad (4)$$

Ceq: 0.5 mass% or less

Ceq is prescribed by Expression (5) below and calculated from contents [%C], [%Si], and [%Mn] of C, Si, and Mn. Upon Ceq exceeding 0.5 mass%, quench hardenability increases excessively, and the toughness of the weld portion degrades. Accordingly, Ceq is set to be 0.5 mass% or less. Conversely, upon reducing Ceq to less than 0.1 mass%, quench hardenability becomes insufficient, and due to coarsening of the microstructure, toughness degrades. Therefore, Ceq is preferably from 0.1 mass% to 0.5 mass%.

$$Ceq = [\%C] + ([\%Si]/24) + ([\%Mn]/6) \quad (5)$$

The composition of the steel sheets to which the present invention is applied may further include the components below in addition to the essential components described above.

Al: 0.005 mass% to 0.10 mass%

Aluminum (Al) needs to be added at a content of 0.005 mass% or more for deoxidation during the refining process for welding steel sheet materials. If Al is added to a content exceeding 0.10 mass%, however, the deoxidation effect reaches a plateau. Accordingly, the Al content is preferably in a range of 0.005 mass% to 0.10 mass%.

V: 0.003 mass% to 0.10 mass%

During cooling after rolling in the process of manufacturing a steel sheet, V precipitates as VN in the austenite grains, and ferrite precipitates with this VN as a product nucleus. V thus has the effect of contributing to refining the crystal grains and improving the toughness of the steel sheet. Furthermore, VN also precipitates within ferrite grains after ferrite transformation and increases the strength of the steel sheet. Hence, the strength of the steel sheets 5 can be increased without performing intensified water cooling during the cooling after rolling. As a result, the characteristics of the steel sheet in the sheet thickness direction can be made uniform, and residual stress and residual strain can be reduced. When V content is less than 0.003 mass%, these effects are not obtained. If the V content exceeds 0.10 mass%, however, the toughness of the steel sheet degrades. Accordingly, the V content is preferably in a range of 0.003 mass% to 0.10 mass%. A range of 0.05 mass% to 0.10 mass% is more preferable.

At least one selected from the group consisting of Cu: 0.05 mass% to 1.0 mass%, Ni: 0.05 mass% to 1.0 mass%, Cr: 0.05 mass% to 0.50 mass%, Mo: 0.02 mass% to 0.50 mass%, and Nb: 0.003 mass% to 0.050 mass%

Cu, Ni, Cr, Mo, and Nb are all elements that improve the quench hardenability of a steel sheet and that also have the effect of refining TiN and VN by lowering the $Ar_3$ transformation point. By lowering the $Ar_3$ transformation point, the ferrite grains are refined, and by a synergetic effect with the effect of strengthening by precipitation of VN, the steel sheet can be strengthened even further. Such effects are not obtained for a Cu content of 0.05 mass% or less, Ni content of 0.05 mass% or less, Cr content of 0.05 mass% or less, Mo content of 0.02 mass% or less, or Nb content of 0.003 mass% or less. Conversely, if these elements are added in excess, the $Ar_3$ transformation point lowers too much, yielding a steel sheet in which the bainite microstructure predominates. While strength increases, this leads to degradation of toughness. Individually investigating the effects of each element revels that when Cu exceeds 1.0 mass%, the hot workability of the steel sheet degrades; when Ni exceeds 1.0 mass%, the manufacturing cost of the steel sheet rises; when Cr exceeds 0.50 mass%, the toughness degrades; when Mo exceeds 0.50 mass%, the toughness degrades; and when Nb exceeds 0.050 mass%, the toughness degrades. Accordingly, preferable content ranges are 0.05 mass% to 1.0 mass% of Cu, 0.05 mass% to 1.0 mass% of Ni, 0.05 mass% to 0.50 mass% of Cr, 0.02 mass% to 0.50 mass% of Mo, and 0.003 mass% to 0.050 mass% of Nb.

Note that components of the steel sheets other than the above-listed elements are Fe and incidental impurities.

EXAMPLES

Using steel sheets (sheet thickness: 6 mm, 12 mm) having the components listed in Table 1, friction-stir welding was performed in the manner illustrated in FIG. 1. The joint butting face of the steel sheets was a groove without an angle (a so-called square,groove) in a surface state as for milling, and friction-stir welding was performed with a one-sided single pass.

[Table 1]

Table 1

| Type of steel | Chemical composition (mass %) | | | | | | | | | | | | | | | | |
|---|---|---|---|---|---|---|---|---|---|---|---|---|---|---|---|---|---|
| | C | Si | Mn | P | S | O | Ti | N | Ti/N | Al | V | Cu | Ni | Cr | Mo | Nb | Ceq |
| A | 0.07 | 0.22 | 1.53 | 0.006 | 0.002 | 0.0009 | 0.017 | 0.0049 | 3.47 | 0.050 | tr | tr | tr | tr | tr | tr | 0.34 |
| B | 0.05 | 0.29 | 1.29 | 0.006 | 0.001 | 0.0013 | 0.011 | 0.0047 | 2.34 | 0.027 | 0.032 | tr | tr | tr | 0.073 | 0.044 | 0.27 |
| C | 0.13 | 0.23 | 0.97 | 0.009 | 0.002 | 0.0007 | 0.002 | 0.0043 | 0.47 | 0.036 | tr | tr | tr | tr | tr | tr | 0.30 |
| D | 0.05 | 0.28 | 1.27 | 0.006 | 0.002 | 0.0015 | 0.012 | 0.0045 | 2.67 | 0.022 | 0.030 | tr | tr | tr | 0.300 | tr | 0.27 |
| E | 0.06 | 0.30 | 1.27 | 0.005 | 0.001 | 0.0014 | 0.011 | 0.0045 | 2.44 | 0.024 | 0.028 | 0.10 | 0.10 | 0.30 | tr | tr | 0.28 |
| F | 0.05 | 0.03 | 1.30 | 0.006 | 0.002 | 0.0014 | 0.012 | 0.0047 | 2.55 | 0.027 | 0.030 | 0.30 | 0.30 | 0.10 | tr | tr | 0.27 |

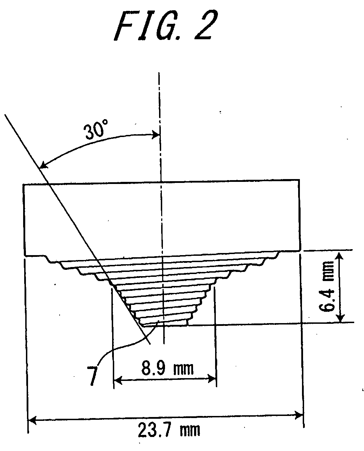

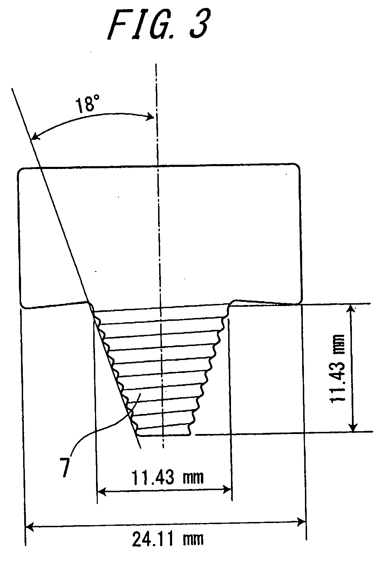

The rotating tool that was used was manufactured from polycrystalline cubic boron nitride (PCBN) material. When working, the weld portion was shielded with argon gas to prevent oxidation of the weld portion. During friction-stir welding of steel sheets with a sheet thickness of 6 mm, the rotating tool that was used had a shoulder inclined in a convex shape and including a spiral 7, and the pin also included the spiral 7 (see FIG. 2). The angle of advance $\alpha$ was set to 0° (i.e. the rotation axis 4 was perpendicular). During friction-stir welding of steel sheets with a sheet thickness of 12 mm, the rotating tool that was used had a shoulder inclined in a concave shape and not including a spiral, whereas the pin included the spiral 7 (see FIG. 3). The angle of advance $\alpha$ was set to 3.5°. The angle of advance $\alpha$ is the angle formed between the rotation axis 4 and a line perpendicular to the steel sheet 5.

Table 2 lists the combinations of steel sheets and processing conditions. Inventive Examples 1 to 14 in Table 2 are examples satisfying the present invention. Comparative Example 1 is an example for which HIPT exceeds the range of the present invention. Comparative Examples 2 and 3 are examples for which [%Ti]/[%N] exceeds the range of the present invention. Comparative Examples 4 to 8 are examples for which the Ti content and [%Ti]/[%N] exceed the range of the present invention.

[Table 2]

Table 2

| | Specimen steel sheet | | Processing conditions | | | | Ti content, N content, and upper/lower limits of [%Ti]/[%N] in steel sheet prescribed in relation to HITP | | | | | |
|---|---|---|---|---|---|---|---|---|---|---|---|---|
| | Sheet thickness (mm) | Steel type | Rotation speed of rotating tool (rev/min) | Rotational torque of rotating tool (Nm) | Travel speed of rotating tool (mm/min) | HIPT (kJ/mm$^2$) | Ti content lower limit (mass%) | Ti content upper limit (mass%) | N content lower limit (mass%) | N content upper limit (mass%) | [%Ti]/[%N] lower limit | [%Ti]/[%N] upper limit |
| Inventive Example 1 | 6 | A | 350 | 145 | 76.2 | 0.70 | 0.0080 | 0.1871 | 0.0033 | 0.0167 | 2.33 | 10.7 |
| Inventive Example 2 | 6 | A | 350 | 177 | 177.8 | 0.36 | 0.0063 | 0.2314 | 0.0031 | 00195 | 2.05 | 11.8 |
| Inventive Example 3 | 6 | A | 550 | 143 | 177.8 | 0.46 | 0.0068 | 0.2183 | 0.0031 | 0.0186 | 2.14 | 11.5 |
| Inventive Example 4 | 12 | A | 550 | 120 | 25.4 | 1.36 | 0.0113 | 0.0987 | 0.0039 | 0.0112 | 2.88 | 8.5 |
| Inventive Example 5 | 12 | A | 450 | 144 | 50.8 | 0.67 | 0.0078 | 0.1910 | 0.0033 | 0.0169 | 2.31 | 10.8 |
| Inventive Example 6 | 6 | B | 350 | 189 | 177.8 | 0.39 | 0.0064 | 0.2281 | 0.0031 | 0.0193 | 2.07 | 11.7 |
| Inventive Example 7 | 6 | B | 550 | 148 | 177.8 | 0.48 | 0.0069 | 0.2161 | 0.0031 | 0.0185 | 2.15 | 11.4 |
| Inventive Example 8 | 12 | B | 450 | 139 | 50.8 | 0.64 | 0.0077 | 0.1941 | 0.0033 | 0.0171 | 2.29 | 10.9 |
| Inventive Example 9 | 6 | D | 550 | 150 | 177.8 | 0.49 | 0.0069 | 0.2152 | 0.0032 | 0.0185 | 2.15 | 11.4 |
| Inventive Example 10 | 12 | D | 450 | 145 | 50.8 | 0.67 | 0.0079 | 0.1904 | 0.0033 | 0.0169 | 2.31 | 10.8 |
| Inventive Example 11 | 6 | E | 550 | 144 | 177.8 | 0.47 | 0.0068 | 0.2178 | 0.0031 | 0.0186 | 2.14 | 11.4 |
| Inventive Example 12 | 12 | E | 450 | 143 | 50.8 | 0.66 | 0.0078 | 01916 | 0.0033 | 0.0170 | 2.30 | 10.8 |

| | Specimen steel sheet | | Processing conditions | | | | Ti content, N content, and upper/lower limits of [%Ti]/[%N] in steel sheet prescribed in relation to HITP | | | | | |
|---|---|---|---|---|---|---|---|---|---|---|---|---|
| | Sheet thickness (mm) | Steel type | Rotation speed of rotating tool (rev/min) | Rotational torque of rotating tool (Nm) | Travel speed of rotating tool (mm/min) | HIPT (kJ/mm$^2$) | Ti content lower limit (mass%) | Ti content upper limit (mass%) | N content lower limit (mass%) | N content upper limit (mass%) | [%Ti]/[%N] lower limit | [%Ti]/[%N] upper limit |
| Inventive Example 13 | 6 | F | 550 | 148 | 177.8 | 0.48 | 0.0069 | 0.2161 | 0.0031 | 0.0185 | 2.15 | 11.4 |
| Inventive Example 14 | 12 | F | 450 | 141 | 50.8 | 0.65 | 00078 | 0.1928 | 0.0033 | 0.0171 | 2.29 | 10.8 |
| Comparative Example 1 | 12 | A | 400 | 116 | 12.7 | 1.91 | 0.0141 | 0.0251 | 0.0043 | 0.0066 | 3.34 | 6.6 |
| Comparative Example 2 | 6 | B | 350 | 160 | 76.2 | 0.77 | 0.0083 | 0.1774 | 0.0034 | 0.0161 | 2.39 | 10.4 |
| Comparative Example 3 | 12 | B | 550 | 114 | 25.4 | 1.29 | 0.0110 | 0.1078 | 0.0038 | 0.0117 | 2.83 | 8.7 |
| Comparative Example 4 | 6 | C | 350 | 151 | 76.2 | 0.73 | 0.0081 | 0.1832 | 0.0034 | 0.0165 | 2.35 | 10.6 |
| Comparative Example 5 | 6 | C | 350 | 183 | 177.8 | 0.38 | 0.0064 | 0.2297 | 0.0031 | 0.0194 | 2.06 | 11.7 |
| Comparative Example 6 | 6 | C | 550 | 139 | 177.8 | 0.45 | 0.0068 | 0.2200 | 0.0031 | 0.0187 | 2.13 | 11.5 |
| Comparative Example 7 | 12 | C | 550 | 110 | 25.4 | 1.25 | 0.0107 | 0.1138 | 0.0038 | 0.0121 | 2.79 | 8.8 |
| Comparative Example 8 | 12 | C | 450 | 136 | 50.8 | 0.63 | 0.0077 | 0.1959 | 0.0033 | 0.0172 | 2.28 | 10.9 |

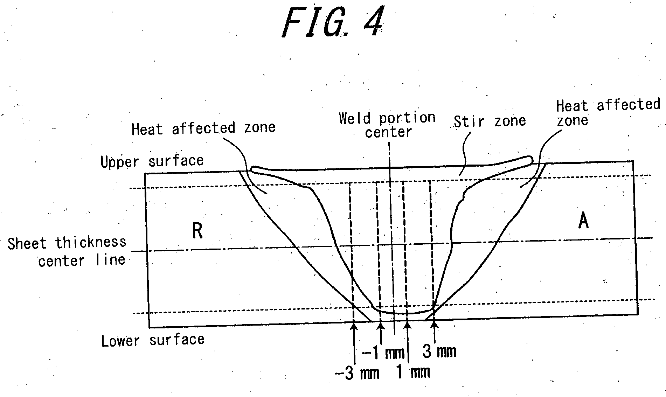

From the joint thus obtained, 5 mm wide sub-size #3 specimens as prescribed by JIS Z2202(1998) were collected, and using the method prescribed by JIS Z2242, a Charpy impact test was performed on the specimens. As illustrated in FIG. 4, the specimens were collected by cutting the upper surface and lower surface of the joint so that the sheet thickness center line of the joint overlapped the center line in the width of the specimen. Taking the weld portion center to be the origin, each specimen was notched at four positions: -3 mm, -1 mm, 1 mm, and 3 mm, with the retreating side (R in FIG. 4) direction being negative, and the advancing side (A in FIG. 4) direction being positive.

Using these specimens, a Charpy impact test was performed at a test temperature of -40 °C, and the absorption energy was studied. Table 3 lists the results. Note that in order to convert the absorption energy to correspond to that of a 10 mm wide full-size specimen, the absorption energy listed in Table 3 is 1.5 times the absorption energy of the 5 mm wide sub-size specimen.

[Table 3]

| | Absorption energy (J) | | | |
|---|---|---|---|---|
| | Notch position: -3 mm | Notch position: -1 mm | Notch position: 1 mm | Notch position: 3 mm |
| Inventive Example 1 | 166 | 153 | 181 | 139 |
| Inventive Example 2 | 214 | 203 | 221 | 198 |
| Inventive Example 3 | 215 | 208 | 219 | 201 |
| Inventive Example 4 | 137 | 131 | 155 | 118 |
| Inventive Example 5 | 173 | 163 | 195 | 147 |
| Inventive Example 6 | 335 | 291 | 360 | 185 |
| Inventive Example 7 | 242 | 203 | 257 | 198 |
| Inventive Example 8 | 144 | 115 | 155 | 111 |
| Inventive Example 9 | 196 | 223 | 237 | 185 |
| Inventive Example 10 | 120 | 128 | 143 | 115 |
| Inventive Example 11 | 238 | 220 | 273 | 217 |
| Inventive Example 12 | 167 | 118 | 169 | 109 |
| Inventive Example 13 | 271 | 245 | 301 | 233 |
| Inventive Example 14 | 206 | 176 | 234 | 180 |
| Comparative Example 1 | 61 | 55 | <u>70</u> | <u>52</u> |
| Comparative Example 2 | 115 | <u>91</u> | 135 | <u>93</u> |
| Comparative Example 3 | <u>82</u> | <u>56</u> | <u>79</u> | <u>51</u> |
| Comparative Example 4 | <u>47</u> | <u>55</u> | 142 | <u>92</u> |
| Comparative Example 5 | <u>91</u> | 105 | 270 | 177 |
| Comparative Example 6 | <u>77</u> | <u>91</u> | 228 | 150 |
| Comparative Example 7 | <u>28</u> | <u>33</u> | <u>81</u> | <u>56</u> |
| Comparative Example 8 | <u>55</u> | <u>64</u> | 164 | 107 |

As is clear from Table 3, for Inventive Examples 1 to 14, the absorption energy of the specimens with different notch positions was 100 J or more for each position.

By contrast, for Comparative Examples 1 to 8, the absorption energy was 100 J or more for some notch positions, but in most cases, the absorption energy was less than 100 J.

Comparing Inventive Example 2 and Comparative Example 6, for which the absorption energy of the specimen with a notch position of 1 mm was nearly equal, the difference between the maximum and minimum of the absorption energy in Inventive Example 2 was 23 J in (4) specimens with differing notch positions, whereas the difference between the maximum and minimum of the absorption energy in Comparative Example 6 was 151 J, a wider variation than Inventive Example 2. Furthermore, comparing Inventive Example 8 and Comparative Example 8, for which the absorption energy of the specimen with a notch position of 3 mm was nearly equal, the difference between the maximum and minimum of the absorption energy in Inventive Example 8 was 44 J in (4) specimens with differing notch positions, whereas the difference between the maximum and minimum of the absorption energy in Comparative Example 8 was 100 J, a wider variation than Inventive Example 8.

As described above, it was confirmed that according to the present invention, when friction-stir welding steel sheets, local change in the frictional heat and plastic flow generated by friction can be relieved, and as a result, a weld portion with uniform and good toughness can be formed.

REFERENCE SIGNS LIST

1:    Rotating tool
2:    Shoulder
3:    Pin
4:    Rotation axis
5:    Steel sheet
6:    Weld portion
7:    Spiral

**Claims**

1. A method for friction-stir welding of steel sheets (5), the method comprising: while inserting a rotating tool (1) into a weld portion (6) of the steel sheets (5), moving the rotating tool (1) while causing the rotating tool (1) to rotate, and softening the steel sheets (5) by frictional heat with the rotating tool (1), stirring a softened region with the rotating tool (1) so as to cause plastic flow to occur, the rotating tool (1) including a shoulder (2) and a pin (3) disposed on the shoulder (2) and sharing a rotation axis (4) with the shoulder (2), at least the shoulder (2) and the pin (3) being made of a material harder than the steel sheets (5), wherein
a welding heat input HIPT $(kJ/mm^2)$ per unit length of a sheet thickness of the steel sheets (5) calculated with Expression (1) is controlled to be in a range of 0.3 to 1.5, when for the rotating tool (1), rotation speed RS is from 100 rpm to 1000 rpm, rotational torque RT is from 50 Nm to 500 Nm, and travel speed TS is from 10 mm/min to 1000 mm/min, and the sheet thickness is t (mm), and
the steel sheets (5) have a composition consisting of 0.01 mass% to 0.2 mass% of C, 0.5 mass% to 2.0 mass% of Mn, 0.6 mass% or less of Si, 0.030 mass% or less of P, 0.015 mass% or less of S, and 0.0060 mass% or less of O, a content of Ti [%Ti] and a content of N [%N] satisfying Expressions (2) to (4) in relation to the HIPT, Ceq calculated with Expression (5) from contents [%C], [%Si], and [%Mn] of C, Si, and Mn being 0.5 mass% or less, optionally at least one selected from the group consisting of Al: 0.005 mass% to 0.10 mass%, V: 0.003 mass% to 0.10 mass%, Cu: 0.05 mass% to 1.0 mass%, Ni: 0.05 mass% to 1.0 mass%, Cr: 0.05 mass% to 0.50 mass%, Mo: 0.02 mass% to 0.50 mass%, and Nb: 0.003 mass% to 0.050 mass%, and the balance being Fe and incidental impurities:

$$HIPT = (6.28 \times RT \times RS)/TS/t/1000 \quad (1)$$

$$0.0045 + (1/200) \times HIPT \leq [\%Ti] \leq 0.28 - (2/15) \times HIPT \quad (2)$$

$$0.00275 + (1/1200) \times HIPT \leq [\%N] \leq 0.0225 - (1/120) \times HIPT \quad (3)$$

$$1.75 + (5/6) \times HIPT \leq [\%Ti]/[\%N] \leq 13 - (10/3) \times HIPT \quad (4)$$

$$Ceq = [\%C] + ([\%Si]/24) + ([\%Mn]/6) \quad (5)$$

where [%X] is content of element X (mass%).

## Patentansprüche

**1.** Verfahren für das Rührreibschweißen von Stahlblechen (5), wobei das Verfahren umfasst: während des Einfügens eines Rotationswerkzeuges (1) in einen Schweißabschnitt (6) der Stahlbleche (5), bewegen des Rotationswerkzeuges (1), während bewirkt wird, dass sich das Rotationswerkzeug (1) dreht, und Plastifizieren der Stahlbleche (5) durch Reibungswärme mit dem Rotationswerkzeug (1), Verrühren eines plastifizierten Bereiches mit dem Rotationswerkzeug (1), um so das Auftreten eines plastischen Flusses zu bewirken, wobei das Rotationswerkzeug (1) eine Schulter (2) und einen Stift (3) umfasst, der auf der Schulter (2) angeordnet ist und sich eine Rotationsachse (4) mit der Schulter (2) teilt, und wenigstens die Schulter (2) und der Stift (3) aus einem Material bestehen, das härter ist als die Stahlbleche (5), wobei

eine Schweißwärmezufuhr HIPT (kJ/mm$^2$) pro Längeneinheit einer Blechdicke der Stahlbleche (5), die mit der Gleichung (1) berechnet wird, derart gesteuert wird, dass sie in einem Bereich von 0,3 bis 1,5 liegt, wenn für das Rotationswerkzeug (1) die Rotationsgeschwindigkeit RS zwischen 100 U/min und 1.000 U/min beträgt, das Rotationsdrehmoment RT zwischen 50 Nm und 500 Nm liegt und die Vorschubgeschwindigkeit TS zwischen 10 mm/min und 1.000 mm/min liegt und die Blechdicke t (mm) ist, und

die Stahlbleche (5) eine Zusammensetzung haben, die aus 0,01 Massen-% bis 0,2 Massen-% C, 0,5 Massen-% bis 2,0 Massen-% Mn, 0,6 Massen-% oder weniger Si, 0,030 Massen-% oder weniger P, 0,015 Massen-% oder weniger S und 0,0060 Massen-% oder weniger O, einem Gehalt von Ti [%Ti] und einem Gehalt von N [%N], die die Ausdrücke (2) bis (4) in Bezug auf HIPT erfüllen, Ceq, berechnet mit dem Ausdruck (5) aus den Gehalten [%C], [%Si] und [%Mn] von C, Si und Mn mit 0,5 Massen-% oder weniger, und wahlweise wenigstens einem Element besteht, das aus der Gruppe gewählt ist, die besteht aus: Al: 0,005 Massen-% bis 0,10 Massen-%, V: 0,003 Massen-% bis 0,10 Massen-%, Cu: 0,05 Massen-% bis 1,0 Massen-%, Ni: 0,05 Massen-% bis 1,0 Massen-%, Cr: 0,05 Massen-% bis 0,50 Massen-%, Mo: 0,02 Massen-% bis 0,50 Massen-% und Nb: 0,003 Massen-% bis 0,050 Massen-%, wobei die Restmenge Fe und zufällige Verunreinigungen sind:

$$\text{HIPT} = (6{,}28 \times RT \times RS)/TS/t/1000 \qquad (1)$$

$$0{,}0045 *+ (1/200) \times \text{HIPT} \leq [\%Ti] \leq 0{,}28 - (2/15) \times \text{HIPT} \qquad (2)$$

$$0{,}00275 + (1/1200) \times \text{HIPT} \leq [\%N] \leq 0{,}0225 - (1/120) \times \text{HIPT} \qquad (3)$$

$$1{,}75 + (5/6) \times \text{HIPT} \leq [\%Ti]/[\%N] \leq 13 - (10/3) \times \text{HIPT} \qquad (4)$$

$$Ceq = [\%C] + ([\%Si]/24) + ([\%Mn]/6) \qquad (5)$$

wobei [%X] der Gehalt des Elementes X (Massen-%) ist.

## Revendications

**1.** Procédé de soudage par friction-agitation de tôles d'acier (5), le procédé comprenant : tout en insérant un outil rotatif (1) dans une partie de soudure (6) des tôles d'acier (5), le déplacement de l'outil rotatif (1) en faisant tourner l'outil rotatif (1), et le ramollissement des tôles d'acier (5) par chaleur de friction avec l'outil rotatif (1), l'agitation d'une région ramollie avec l'outil rotatif (1) afin de provoquer l'écoulement plastique, l'outil rotatif (1) incluant une épaule (2) et une broche (3) disposée sur l'épaule (2) et partageant un axe de rotation (4) avec l'épaule (2), au moins l'épaule (2) et la broche (3) étant constituées d'un matériau plus dur que les tôles d'acier (5), où le point le plus élevé de l'apport de chaleur de soudure (kJ/mm$^2$) par longueur unitaire d'une épaisseur de tôle des feuilles d'acier (5) calculé avec l'Expression (1) est régulé pour se trouver dans une plage de 0,3 à 1,5, lorsque pour l'outil rotatif (1), la vitesse de rotation RS est de 100 tr/min à 1 000 tr/min, le couple de rotation RT est de 50 Nm à 500 Nm, et la vitesse de course TS est de 10 mm/min à 1 000 mm/min, et l'épaisseur de la tôle est t (mm), et les tôles d'acier (5) présentent une composition constituée de 0,01 % en masse à 0,2 % en masse de C, de 0,5 % en masse à 2,0 % en masse de Mn, de 0,6 % en masse ou moins de Si, de 0,030 % en masse ou moins de P, de 0,015 % en masse ou moins de S, et de 0,0060 % en masse ou moins de O, une teneur de Ti [%Ti] et une teneur de N [%N] satisfaisant les Expressions (2) à (4) en relation avec le HiPt, $C_{éq.}$ calculé avec l'Expression (5) à partir des teneurs [%C], [%Si], et [%Mn] de C, Si, et Mn étant de 0,5 % en masse ou moins, éventuellement au moins l'un sélectionné dans le groupe constitué de Al : de 0,005 % en masse à 0,10 % en masse, V : de 0,003 % en masse à 0,10 % en masse, Cu : de 0,05 % en masse à 1,0 % en masse, Ni : de 0,05 % en masse à 1,0 % en masse, Cr : de 0,05 % en masse à 0,50 % en masse, Mo : de 0,02 % en masse à 0,50 % en masse, et Nb : de 0,003 % en masse à 0,050 % en masse, et le reste étant Fe et des impuretés accidentelles :

```
HiPt = (6,28 x RT x RS)/TS/t/1000  (1)
```

```
0,0045 + (1/200) x HiPt ≤ [%Ti] ≤ 0,28 - (2/15) x HiPt
                         (2)
```

```
0,00275 + (1/1200) x HiPt ≤ [%N] ≤ 0,0225 -
          (1/120) x HiPt        (3)
```

```
1,75 + (5/6) x HiPt ≤ [%Ti]/[%N] ≤ 13 - (10/3) x HiPt
                      (4)
```

```
Céq. = [%C] + ([%Si]/24) + ([%Mn]/6)      (5)
```

où [%X] est la teneur de l'élément X (% en masse).

# FIG. 1

# FIG. 2

30°

6.4 mm

7

8.9 mm

23.7 mm

# FIG. 3

18°

11.43 mm

7

11.43 mm

24.11 mm

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S62183979 A
- JP H7505090 A
- JP 2003532542 A
- JP 2003532543 A
- JP 2008031494 A

**Non-patent literature cited in the description**

- Correlation of Microstructures and Process Variables in FSW HSLA-65 Steel. *Welding Journal, American Welding Society,* 01 May 2011, vol. 90 (5